Europäisches Patentamt

**European Patent Office**

Office européen des brevets

(11) Publication number: **0 112 333**
**B1**

# EUROPEAN PATENT SPECIFICATION

(45) Date of publication of patent specification: **01.06.88**

(51) Int. Cl.⁴: **H 01 R 4/64**

(21) Application number: **82902415.7**

(22) Date of filing: **30.06.82**

(86) International application number:
**PCT/US82/00885**

(87) International publication number:
**WO 84/00255 19.01.84 Gazette 84/02**

(54) **FASTENING DEVICE FOR COMPOSITE STRUCTURES.**

(43) Date of publication of application:
**04.07.84 Bulletin 84/27**

(45) Publication of the grant of the patent:
**01.06.88 Bulletin 88/22**

(84) Designated Contracting States:
**DE FR GB NL SE**

(56) References cited:
**DE-A-2 134 605**
**DE-A-2 651 262**
**FR-A-2 265 194**
**GB-A- 114 268**
**GB-A-1 459 182**
**US-A-2 990 533**
**US-A-3 538 488**
**US-A-3 969 815**

(73) Proprietor: **THE BOEING COMPANY**
**P.O. Box 3707 Mail Stop 7E-25**
**Seattle Washington 98124-2207 (US)**

(72) Inventor: **OLSON, Glenn Oliver**
**108 North 67th Street**
**Seattle, WA 98103 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

This invention relates to an electrical connector for connecting conductive fibers of composite material to a shank portion of a fastening device known per se, e.g. DE—A—2 134 605.

Graphite epoxy laminates are electrically aniso-trophic with electrical conductivity increasing in the direction of the fibers (longitudinally). Continuous fibers are available in a number of structures including yarns or tows containing 400 to 160,000 individual filaments. Uni-directional tapes and bi-directional fabrics at selected fiber orientations comprise a variety of graphite epoxy laminates. Efforts to electrically connect in a transverse direction to the aforementioned laminate structures is generally precluded by the transverse electrical properties with resistance 200 to 1,000 times greater than resistance in the longitudinal direction of the laminate structure.

Heretofore, an insert device and locking nut were threaded on the shank portion of a fastener utilized to secure together a composite panel structure comprising a pair of graphite epoxy laminate panel members.

It is, accordingly, an object of this invention to provide a locking nut structure for threading to the shank portion of a fastener which locking nut structure includes a coned surface portion forming an angle of between 85° to about 150°.

It is a further object of the present invention to provide means integral with a locking nut for making countersunk contact with a graphite epoxy laminate structure.

It is yet another object of the present invention to provide a countersunk insert device having an integral locking nut portion for utilization in a double countersink fastener installation.

It is still a further object of the present invention to provide a coned locking nut having a cone angle of about 100° for utilization in making electrical contact between the shank portion of a fastener and a graphite epoxy laminate surface.

A full understanding of the invention and of its further objects and advantages and the several unique aspects thereof, will be had from the following description when taken conjunction with the accompanying sheet of drawings in which:

FIGURE 1 is a sectional view illustrative of an apparatus and method in accordance with a preferred embodiment of the present invention for providing increased conductivity between fastener and composite structure;

FIGURE 2 is a top view of the self-locking coned nut shown in the composite assembly of FIGURE 1;

FIGURE 3 is a sectional view of the self-locking coned nut taken along the lines 4—4 of FIGURE 2;

FIGURE 4 is a side view of the self-locking coned nut shown in FIGURES 2 and 3, more clearly showing the angle made by the coned side surface portions of the self-locking coned nut; and

FIGURE 5 is a bottom view of the self-locking coned nut shown in FIGURES 2, 3 and 4.

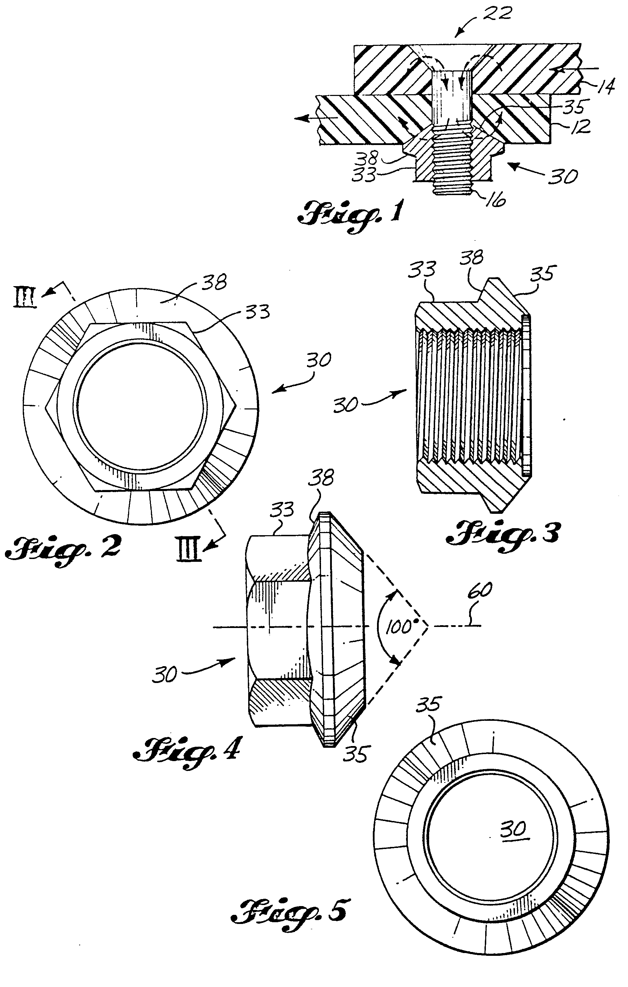

Turning to FIGURE 1, it will be noted that in a double countersunk fastener installation shown, the shank portion 16 of countersunk fastener 22 is secured to panel member 12 of a pair of composite panel members 12 and 14, by a locking nut 30 having a top-shaped hexagonal cross section portion 33 as seen also in FIGURE 2 to which a driving tool is attached for torquing during the installation process. It will also be seen that nut 30 includes a bottom coaxial frustro conically shaped body portion 35 (as also can be seen in FIGURE 4). It can be seen in FIGURE 4 that coaxial frustro conically shaped body portion 35 has external surfaces which are inclined at an angle of about 50° with respect to the central axis 60 of coaxial frusto conically shaped body portion 35. The total angle subtended by the inclined side surface portions of coaxially disposed frusto conically shaped body portion 35 subtend an angle of 100°. The angle subtended in FIGURE 4, while shown as 100°, may range from about 85° to about 150°. The bottom surface 38, as seen in FIGURES 3, 4 and 5, provides a tapered return surface to hexagonal cross-sectionally shaped driven end 33 of coned nut 30 in the present illustrative embodiment.

Electrical connection to the longitudinal plies of advanced composite panel structures such as graphite epoxy laminate panel members 12 and 14 is of critical importance due to the transverse electrical electrical properties (200 to 1,000 times worse than longitudinal connection) as herein accomplished through utilization of self-locking hexagonal self-aligning coned nut structure 30.

## Claims

1. Electrical connector for connecting conductive fibres of a composite structure to a shank portion (16) of a fastener (22), said fastener having a central axis extending in a first direction and the longitudinal conductive fibers of the composite structure (12, 14) extending in a plane perpendicular to said central axis, the electrical connector being composed of said fastener (22) and a self-locking nut (33) having a coaxial frusto conically shaped portion, characterized by said frusto conically shaped portion having an outer surface (35) abutting said longitudinal conductive fibers of said conductive structure (12) and said outer surface (35) of said coaxial frusto conically shaped portion having an angle of inclination of about 50 degrees with respect to the central axis (60) of said coaxial frusto conically shaped portion, establishing an electrical connection between the longitudinal conductive fibres and the shank portion (16) of the fastener (22).

2. An electrical connector according to claim 1 wherein the opposite side surface portions of said coaxial frusto conically shaped portion subtend and angle between 85° and 100°.

3. An electrical connector corresponding to claim 1 or 2 characterized in that said shank portion is of titanium.

## Patentansprüche

1. Elektrischer Verbinder zum Verbinden leitfähiger Fasern einer Verbundstruktur mit einem Schaftteil (16) eines Befestigungselements (22), wobei das Befestigungselement eine mittige Achse hat, die sich in einer ersten Richtung erstreckt, und sich die leitfähigen Längsfasern der Verbundstruktur (12, 14) in einer Ebene senkrecht zu der mittigen Achse erstrecken, wobei der elektrische Verbinder aus dem Befestigungselement (22) und einer selbstsperrenden Mutter (33), die einen koaxialen kegelstumpfförmig geformten Teil hat, zusammengesetzt ist, dadurch gekennzeichnet, daß der kegelstumpfförmig geformte Teil, der eine äußere Oberfläche (35) hat, die an den leitfähigen Längsfasern der leitfähigen Struktur (12) anliegt, wobei diese äußere Oberfläche (35) des koaxialen kegelstumpfförmig geformten Teils einen Neigungswinkel von etwa 50 Grad bezüglich der mittigen Achse (60) des koaxialen kegelstumpfförmig geformten Teils hat, eine elektrische Verbindung zwischen den leitfähigen Längsfasern und dem Schaftteil (16) des Befestigungselements (22) herstellt.

2. Elektrischer Verbinder nach Anspruch 1, dadurch gekennzeichnet, daß die entgegengesetzten Seitenoberflächenteile des koaxialen kegelstumpfförmig geformten Teils einen Winkel zwischen 85 Grad und 100 Grad einschließen.

3. Elektrischer Verbinder nach Anspruch 1 oder 2, dadurch gekennzeichnet, daß der Schaftteil aus Titan ist.

## Revendications

1. Connecteur électrique pour relier des fibres conductrices d'une structure composite à une partie tige (16) d'une attache (22), cette attache ayant un axe central qui s'étend dans une première direction, les fibres conductrices longitudinales de la structure composite (12, 14) s'étendant dans un plan perpendiculaire audit axe central, le connecteur électrique étant composé de ladite attache (22) et d'un écrou autobloquant (33) ayant une partie coaxiale de forme tronconique, caractérisé par le fait que ladite partie de forme tronconique possède une surface extérieure (35) venant en aboutement contre lesdites fibres conductrices longitudinales de ladite structure conductrice (12), et que ladite surface extérieure (35) de ladite partie coaxiale de forme tronconique possède un angle d'inclinaison d'environ 50° par rapport à l'axe central (60) de ladite partie coaxiale de forme tronconique, établissant une connexion électrique entre les fibres conductrices longitudinales et la partie tige (16) de l'attache (22).

2. Connecteur électrique selon revendication 1, dans lequel les parties de surface latérales opposées de ladite partie coaxiale de forme tronconique sous-tendent un angle compris entre 85° et 100°.

3. Connecteur électrique correspondant à la revendication 1 ou 2, caractérisé en ce que ladite partie tige est en titane.

0 112 333

Fig. 1

Fig. 2

Fig. 3

Fig. 4

Fig. 5

1